Europäisches Patentamt

European Patent Office

Office européen des brevets

(11) Veröffentlichungsnummer: **0 347 641**

**A2**

## (12) EUROPÄISCHE PATENTANMELDUNG

(21) Anmeldenummer: 89110202.2

(22) Anmeldetag: 06.06.89

(51) Int. Cl.⁴: **G01N 25/72**

(30) Priorität: 21.06.88 DE 3820862

(43) Veröffentlichungstag der Anmeldung:
**27.12.89 Patentblatt 89/52**

(84) Benannte Vertragsstaaten:
**AT BE CH DE ES FR GB GR IT LI LU NL SE**

(71) Anmelder: **Sölter, Hans-Joachim, Dipl.-Phys.**
**Schumannstrasse 44b**
**D-2822 Schwanewede(DE)**

(72) Erfinder: **Sölter, Hans-Joachim, Dipl.-Phys.**
**Schumannstrasse 44b**
**D-2822 Schwanewede(DE)**

(74) Vertreter: **Jabbusch, Wolfgang, Dr.**
**Elisabethstrasse 6**
**D-2900 Oldenburg(DE)**

(54) **Verfahren und Vorrichtung zur kontaktlosen Untersuchung von Oberflächen und inneren Strukturen eines festen Prüfkörpers.**

(57) Zur kontaktlosen Untersuchung von Oberflächen und inneren Strukturen eines festen Prüfkörpers, wird gegen den Prüfkörper ein Einzelpuls eines elektromagnetischen Anregungsstrahls, vorzugsweise eines gebündelten Laserstrahls, geworfen und die Wirkung der dabei örtlich und zeitlich induzierten Prüfkörpertemperatur als vom Körper ausgehende Infrarotstrahlung gemessen und zu Informationen über die Oberfläche und die innere Struktur des Prüfkörpers verarbeitet. Der Einzelpuls des Laserstrahls wird dabei in eine Vielzahl von Teilstrahlen zerlegt, deren gleichzeitig auf den Prüfkörper geworfene Abbildungen in einem Feld oder einer Linie zusammengefaßt sind, mit dem der Prüfkörper abgetastet wird.

Fig.1

EP 0 347 641 A2

## Verfahren und Vorrichtung zur kontaktlosen Untersuchung von Oberflächen und inneren Strukturen eines festen Prüfkörpers

Die Erfindung betrifft ein Verfahren zur kontaktlosen Untersuchung von Oberflächen und inneren Strukturen eines festen Prüfkörpers, bei dem gegen den Prüfkörper ein Einzelpuls eines elektromagnetischen Anregungsstrahls, vorzugsweise eines gebündelten Laserstrahls geworfen wird und die Wirkung der dabei örtlich und zeitlich induzierten Prüfkörpertemperatur als vom Körper ausgehende Infrarotstrahlung gemessen und zu Informationen über die Oberfläche und die innnere Struktur des Prüfkörpers verarbeitet wird. Die Erfindung betrifft auch eine Vorrichtung zur Durchführung des vorbezeichneten Verfahrens.

Nach der Zeitschrift "Journal of applied Physics, Volume 32, Number 9, September 1961, S. 1679-1684, ist es bekannt, einen Prüfkörper mit einem Einzelpuls eines Laserstrahls von vorbestimmter Intensität und Zeitdauer zu erwärmen. Die während der Bestrahlung der Oberfläche eines Prüfkörpers an der Oberfläche auftretende Erwärmung wird im Prüfkörper abgeleitet. Durch Wärmeleitung tritt an der der bestrahlten Oberfläche gegenüberliegenden Fläche des Prüfkörpers ein Temperaturanstieg auf. Dieser Temperaturanstieg wird mit einem Fühler gemessen und zur Ermittlung der Temperaturleitfähigkeit des Prüfkörpers ausgewertet.

Die Literaturstelle gibt über die Möglichkeit der Ermittlung der Temperaturleitfähigkeit hinaus keine Anregung, wie auch Informationen über die Beschaffenheit der Oberflächen und in neren Strukturen eines festen Prüfkörpers gewonnen werden können. Es sind jedoch gerade derartige Informationen wichtig, um z.B. kontaktlose Untersuchungen zwecks Qualitätskontrolle, beispielsweise bei industriellen Fertigungsprozessen, vornehmen zu können. Für die Anwendung bei einer Qualitätskontrolle ist ein Untersuchungsverfahren auch nur dann geeignet, wenn es gewährleistet, daß die für jede Untersuchung benötigte Zeit eine noch aktzeptable Größenordnung nicht überschreitet. Größenordnungen im Bereich mehrerer Minuten wären kaum noch akzeptabel, insbesondere für eine Anwendung in einem Fließbandverfahren.

Bekannte Verfahren zur kontaktlosen Untersuchung von Prüfkörpern gewährleisten dies nicht.

Der Erfindung liegt die Aufgabe zugrunde, das bekannte Verfahren so weiterzubilden, daß sich kurze Abtastzeiten ergeben und somit sein Einsatz in der industriellen Qualitätssicherung möglich ist.

Diese Aufgabe ist erfindungsgemäß dadurch gelöst, daß der Einzelpuls des Laserstrahls in eine Vielzahl von Teilstrahlen zerlegt wird, deren gleichzeitig auf den Prüfkörper geworfene Abbildungen in einem Feld oder einer Linie zusammengefaßt sind, mit dem der Prüfkörper abgetastet wird.

Die Energie einer elektromagnetischen Strahlung, z.B. eines Laserstrahles, erzeugt auf der Oberfläche des Prüfkörpers während der Zeitdauer der Einstrahlung, also während eines Pulses, eine Temperaturerhöhung, die von den thermischen und optischen Eigenschaften des Prüfkörpers abhängt. Durch Wärmeleitung vollzieht sich im Prüfkörper ein Temperaturausgleichsprozeß, dessen Ablauf in vertikaler und lateraler Richtung erfaßbar und auswertbar ist. Der Temperaturausgleichsprozeß durch Wärmeleitung im Prüfkörper wird durch Fehler, z.B. Risse, Poren, schlecht haftende Bereiche einer Beschichtung oder Unterschiede in der Zusammensetzung oder Dicke einer Beschichtung gestört. Derartige Fehler können aufgrund unterschiedlicher ma ximaler Temperaturen und unterschiedlicher Anstiegs- und Abfallzeiten der aus dem Laserpuls resultierenden Temperaturerhöhung auf der Prüfkörperoberfläche erfaßt werden. Die mit dem erfindungsgemäßen Verfahren erreichbare Verkürzung der Zeit für eine Untersuchung von Prüfkörpern beruht nunmehr auf der Einbringung nur eines Einzelpulses und einer zeiligen oder flächigen Erzeugung vieler, aus dem Einzelpuls abgeleiteter Laserstrahlen, deren Auftreffpunkte die Prüfkörperoberfläche gleichzeitig aufheizen. Demzufolge ist ein größerer Bereich der Prüfkörperoberfläche der Messung zugänglich. Ein Prüfkörper ist dadurch in kürzester Zeit abtastbar, so daß das Verfahren z.B. bei der Kontrolle von Bauteilen in einem industriellen, z.B. fließenden Fertigungsprozeß einsetzbar ist. Die Abtastzeiten liegen im Sekundenbereich, weil während eines Pulses bereits gemessen und ausgewertet werden kann. Ein Einsatz des Verfahrens ist somit auch bei zeitkritischen Qualitätsprüfungen möglich.

Der einzelne Teilstrahl selbst, dessen Puls gegen den Prüfkörper geworfen wird, kann kreisförmig, rechteckig, sechseckig, linienförmig oder sonstige Querschnittsformen aufweisen. Die Abtastung einer zu prüfenden Fläche kann z.B. durch eine translatorische Bewegung des Prüfkörpers relativ zum fest ausgerichteten Auftreffbereich der Strahlabbildungen erfolgen.

Bei flächenhafter Abtastung kann die gesamte zu prüfende Oberfläche auch auf einmal untersucht werden, so daß noch eine weitere Beschleunigung des Untersuchungsverfahrens erreichbar ist. Dazu wird das von den Teilstrahlen abgedeckte Feld, bzw. der Auftreffbereich entsprechend so bemessen, daß ein Puls ausreicht, um die gesamte Fläche des Prüfkörpers, die erwärmt werden soll, abzudecken.

Bei dem erfindungsgemäßen Verfahren wird nicht nur der Auftreffbereich der Strahlen, sondern auch der danebenliegende unbestrahlte Bereich, in den die Wärme hineinfließt, bis ein Temperaturausgleich erfolgt, untersucht. Dabei können nicht nur in den bestrahlten, sondern auch in den unbestrahlten Bereichen Fehler entdeckt werden. Der erforderliche, zu wählende Abstand zwischen den Teilstrahlen bzw. die Zeit bis sum Temperaturausgleich zwischen den einzelnen bestrahlen Stellen an der Oberfläche des Prüfkörpers hängt unter anderem von seinen Materialeigenschaften und der Länge und Form des Pulses ab.

Die Detektion der Abstrahlung der Wärme von der Untersuchungsfläche kann mit einer Wärmebildkamera oder einem sonstigen Detektor zur Aufnahme von zeilen- oder flächenhaften Abbildungen vorgenommen werden. Es ist dabei möglich, während des Wärmeeindringvorgangs und während der Abstrahlung an der Oberfläche auftretende Temperaturen berührungslos zu messen. Die Meßwerte ergeben Bilder eines Temperaturmusters, das zur weiteren Auswertung digitalisiert und in einen Rechner eingelesen werden kann. Da das Verfahren berührungslos arbeitet, kann es auch unter rauhen industriellen Bedingungen problemlos eingesetzt werden.

Durch Änderung der Pulslänge kann auch die Eindringtiefe des Temperaturpulses und damit die Tiefe, in der Fehler entdeckt werden, gesteuert werden.

Die Intensität der elektromagnetischen Strahlung, z.B. die Intensität eines Laserstrahls, muß bei dem erfindungsgemäßen Verfahren nicht gemessen werden, so daß auf aufwendige optische Komponenten zur Strahlteilung und Messung der Strahlungsintensität verzichtet werden kann. Es wird lediglich die Abstrahlung der induzierten Wärme von der Oberfläche des Prüfkörpers ausgewertet. Neben der Lokalisierung der Fehler ist auch eine Bestimmung der Tiefe, in der sich der Fehler befindet, bei dem erfingungsgemäßen Verfahren möglich. Durch eine Eichmessung an fehlerfreien Stellen und Bestimmung der Temperaturgradienten in der Aufheiz- und Abkühlphase im Vergleich zu fehlerhaften Bereichen kann, bei bekannten thermophysikalischen Eigenschaften des Materials des Prüfkörpers, die Fehlertiefe ohne weiteres bestimmt werden.

Bei dem erfindungsgemäßen Verfahren können die Pulslänge, Pulsintensität und/oder Pulsform der elektromagnetischen Strahlung zur Erzeugung der Temperaturerhöhung auf der Oberfläche und damit die Gradienten des Aufheiz- und Abkühlvorganges und die maximale Temperatur variiert werden, so daß das Verfahren in einfacher Weise dem zu untersuchenden Material anpaßbar ist.

Eine Vorrichtung zur Durchführung des Verfahrens zeichnet sich durch ihren einfachen konstruktiven Aufbau aus. Die Vorrichtung besteht aus einem auf den Prüfkörper ausgerichteten Laser mit Aufweitoptik und einer im Strahlengang zwischen Aufweitoptik und Prüfkörper befindlichen Blende mit entsprechendem Lochbild, die den aufgeweiteten Strahl in Teilstrahlen zerlegt. Die Vorrichtung hat wenigstens einen auf den Prüfkörper gerichteten infrarotempfindlichen Detektor sowie einen Rechner zur Auswertung der vom Detektor gelieferten Meßwerte.

Mit der Aufweitoptik wird der für die Zeitdauer eines Pulses erzeugte Laserstrahl auf den gewünschten Durchmessr aufgeweitet. Aus dem aufgeweiteten Strahl wird mittels der Blende eine Vielzahl von Einzelstrahlen erzeugt. Die Blende kann z.B. quadratische, runde oder streifenförmige Löcher enthalten. Die Einzelstrahlen treffen auf die Oberfläche des zu untersuchenden Prüfkörpers und erzeugen dort ein flächiges Temperaturmuster. Die Änderung der Oberflächentemperatur durch Temperaturausgleich in vertikaler und lateraler Richtung im Prüfkörper kann mit Hilfe des Detektors, vorzugsweise einer Wärmebildkamera, aufgenommen und in digitalisierter Form einem Rechner zur grafischen Darstellung und Auswertung eingegeben werden. Der Detektor kann auch an der Rückseite des Prüfkörpers lokalisiert sein. Es kann auch jeweils ein Detektor an der Vorderseite und Rückseite des Prüfkörpers installiert werden, wobei die Detektoren entweder gleichzeitig oder jeweils getrennt voneinander arbeiten können.

Die Vorrichtung kann in einen laufenden Fertigungsprozeß integriert werden, indem sie beispielsweise an einem Transportweg einer Fertigungsstraße installiert wird. Prüfkörper, z.B. zu prüfende Bauteile, werden dann durch den Arbeitsbereich der Vorrichtung geführt und fortlaufend untersucht. Die Vorrichtung kann auch eine translatorisch bewegbare Halterung für den Prüfkörper aufweisen, so daß beispielsweise Qualitätsprüfungen auch an einzelnen Bauteilen, die in die bewegbaren Halterungen eingesetzt werden, möglich sind.

Die Vorrichtung kann auch mit einer Zylinderlinse, Spiegeloptik oder dergleichen optischen Anordnung ausgerüstet sein, welche den die Aufweitoptik verlassenden Strahl zu einer Linie fokussiert. Der linienförmige Strahl wird dann, wie vorbeschrieben, durch eine entsprechende, als Maske ausgebildete Blende wieder in einzelne Strahlen mit zeilenförmiger Anordnung aufgeteilt.

Ausführungsbeispiele, aus denen sich weitere erfinderische Merkmale ergeben, sind in der Zeichnung dargestellt. Es zeigen:

Fig. 1 eine schematische Ansicht einer Vorrichtung zur kontaktlosen Untersuchung eines Prüfkörpers,

Fig. 2 bis Fig. 4 Ausführungsformen von Blenden mit unterschiedlichen Lochbildern,

Fig. 5 eine Schemadarstellung einer zweiten Ausführungsform der Vorrichtung, die zur zeilenförmigen Abtastung eines Prüfkörpers geeignet ist,

Fig. 6 bis Fig. 8 Ausführungsformen von Blenden, die bei der Vorrichtung gemäß Fig. 5 zur Anwendung kommen und

Fig. 9 ein Temperatur-Zeit-Diagramm.

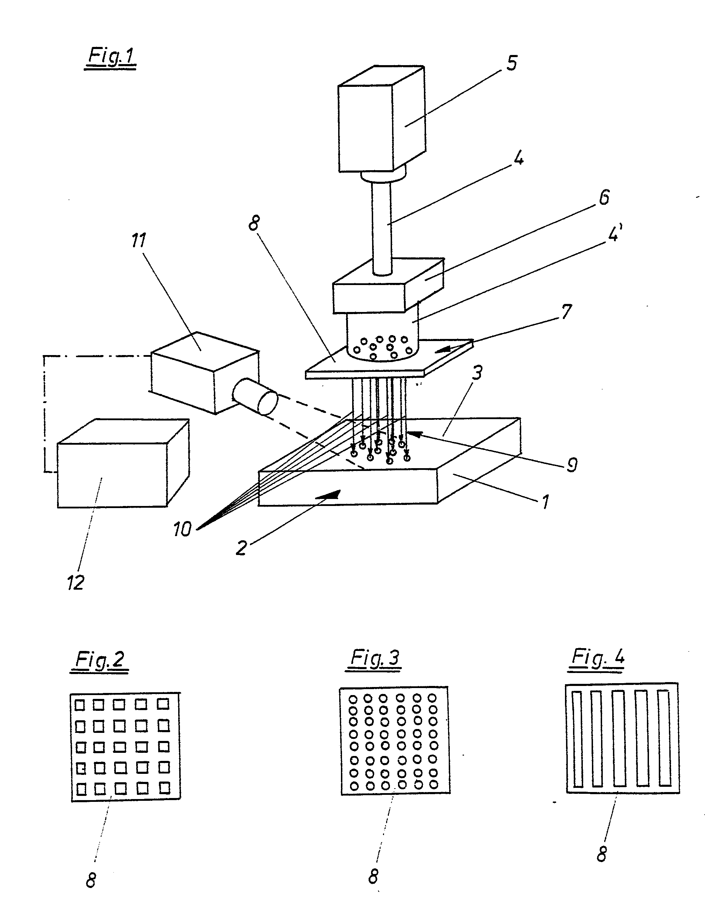

In Fig. 1 ist eine Vorrichtung schematisch dargestellt, mit welcher Prüfkörper 1, die z.B. auf einer Fertigungsstraße in Richtung des Pfeils 2 transportiert werden, zwecks Qualitätskontrolle untersucht werden können. Die Vorrichtung besteht aus einer Einrichtung zur Erzeugung eines Einzelpulses eines auf eine Oberfläche 3 des Prüfkörpers 1 gerichteten elektromagnetischen Anregungsstrahls 4, die hier als schematisch angedeuteter Laser 5 ausgebildet ist. Der für die Zeitdauer des Einzelpulses vorliegende Strahl 4 passiert auf seinem Weg gegen die Oberfläche 3 des Prüfkörpers 1 eine Aufweitoptik 6. Nach dem Passieren der Aufweitoptik ist der Strahl in vorbestimmter Weise in seinem Durchmesser vergrößert, wie es schematisch bei 4' angedeutet ist. Im Strahlengang nach der Aufweitoptik 6 befindet sich ein Strahlteilungsorgan 7, das hier als Blende 8 ausgebildet ist. Die Blende kann auswechselbar von entsprechenden Halterungen getragen sein. Die Blende 8 hat ein vorbestimmtes Lochbild, so daß der aufgeweitete Strahl 4' in ein Bündel 9 von Teilstrahlen 10 zerlegt wird. Jeder Teilstrahl wird beim Auftreffen auf die Oberfläche 3 des Prüfkörpers 1, entsprechend dem Lochbild in der Blende 8, als Lichtfleck abgebildet. Jede Abbildung eines Teilstrahls erzeugt auf der Oberfläche 3 des Prüfkörpers einen Temperaturanstieg während des Einzelpulses. Der Temperaturantrieg während des Pulses und das Abklingen in der Abkühlphase nach dem Pulsende wird mit einem infrarotempfindlichen Detektor 11 gemessen und die digitalisierten Meßwerte werden einem Rechner 12 zur Aufbereitung und Auswertung zugeleitet.

Der infrarotempfindliche Detektor 11 ist hier auf die Oberfläche 3 des Prüfkörpers 1 gerichtet. Selbstverständlich kann der Detektor auch auf die Rückseite des Prüfkörpers 1 gerichtet sein.

Fig. 2 zeigt eine Blende 8 mit quadratischen Löchern. In Fig. 3 ist eine Blende mit runden Löchern dargestellt und in Fig. 4 sind streifenförmige Löcher in der Blende angebracht.

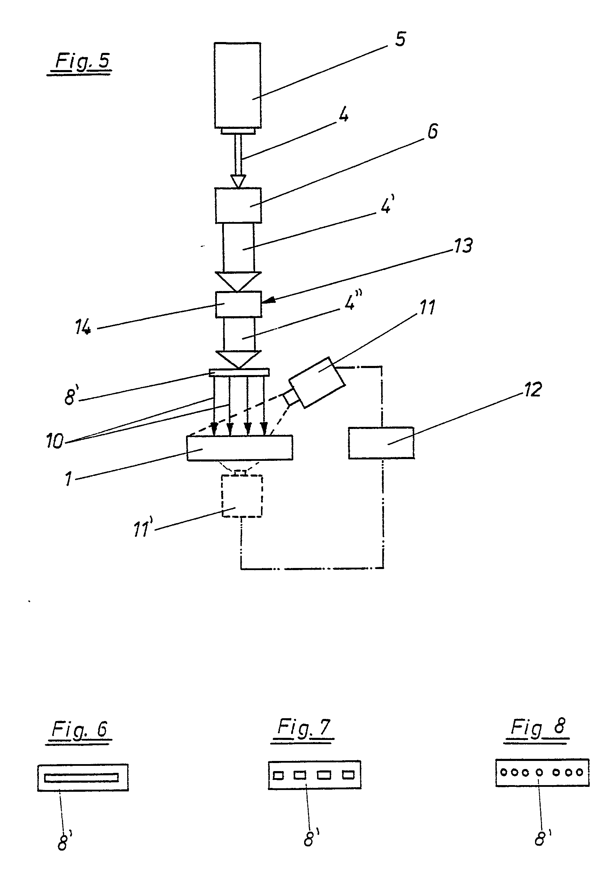

Fig. 5 zeigt eine schematisierte Darstellung einer Ausführungsform der Vorrichtung, bei der, im Gegensatz zu der Ausführung in Fig. 1, die ein flächiges Abtasten des Prüfkörpers 1 erlaubt, ein linienförmiges Abtasten vorgesehen ist. Gleiche Bauteile sind wieder mit gleichen Bezugszahlen bezeichnet. Bei diesem Ausführungsbeispiel wird der aus der Aufweitoptik 6 ausgetretene Strahl 4' noch durch eine fokussierende Anordnung 13 geleitet, die z.B. als Zylinderlinse 14 ausgebildet sein kann. Durch die Zylinderlinse wird der aufgeweitete Strahl auf eine Linie fokussiert, und ist hier mit 4'' bezeichnet. Der zu einer Linie fokussierte Strahl 4'' passiert wiederum eine Blende 8', bevor er auf die Oberfläche des Prüfkörpers 1 trifft, wobei er durch ein entsprechendes Lochbild in der Blende wieder in Teilstrahlen 10 zerlegt werden kann.

Fig. 5 läßt erkennen, daß ein infrarotempfindlicher Detektor 11', der hier gestrichelt gezeichnet ist, auch gegen die Rückseite des Prüfkörpers 1 gerichtet sein kann. Der Detektor 11' wird, wie vorbeschrieben, ebenfalls an den Rechner 12 angeschlossen.

Die Fig. 6 bis 8 zeigen Blenden 8' mit unterschiedlichen Lochbildern zur Erzeugung von Teilstrahlen, die zeilenförmig angeordnet sind und zeilenförmige Abtastung des Prüfkörpers 1 erlauben.

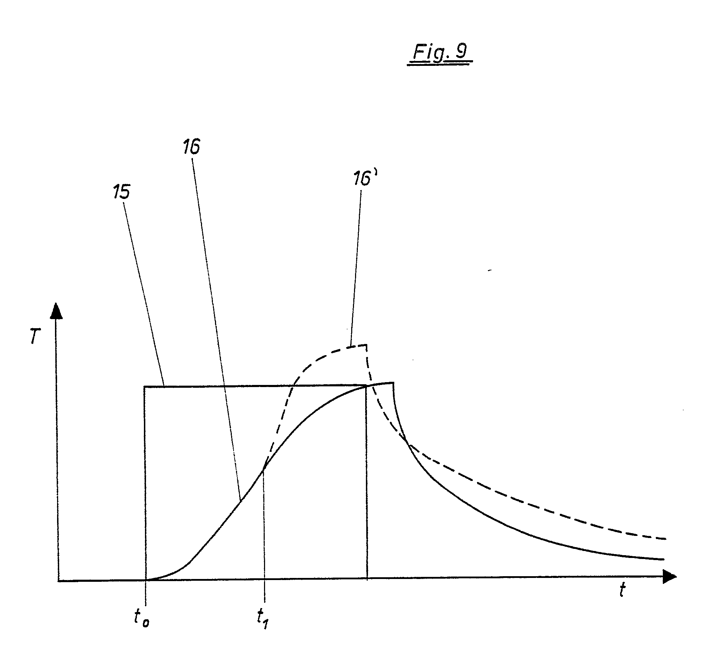

In Fig. 9 ist eine Temperatur(T)-Zeit(t)-Diagramm schematisch dargestellt. Mit 15 ist ein Rechteckpuls eines Lasers bezeichnet. Der Einzelpuls erzeugt beim Auftreffen auf die Oberfläche eines Prüfkörpers eine Temperaturerhöhung, die durch den ansteigenden Ast der Kurve 16 verdeutlicht wird. Der im Prüfkörper erzeugt Temperaturpuls, also die Kurve 16, kann über infrarotempfindliche Detektoren gemessen und ausgewertet werden. Sind thermophysikalische Eigenschaften, wie z.B. Temperatur-und Wärmeleitfähigkeit, Absorptionskoeffizient und/oder Emissionskoeffizient bekannt, kann der Temperaturpuls 16 auch theoretisch berechnet werden und mit jeweils einem gemessenen Temperaturpuls verglichen werden. Befindet sich nun eine Pore oder eine andere Fehlerstelle in einer gewissen Tiefe unter der untersuchten Oberfläche des Prüfkörpers, so ergibt sich eine Abweichung der gemessenen Temperaturerhöhung und -abkühlung auf der Bauteiloberfläche. Bei dem in Fig. 9 gegebenen Dia gramm wird angenommen, daß die Fehlerstelle die Wärme schlechter leitet. Die Wärme des Temperaturpulses wird in der Zeit $t_0$ bis $t_1$ von der Oberfläche bis zur in der Tiefe liegenden Fehlstelle ungestört weitergeleitet. Sobald die Fehlstelle Einfluß auf den Wärmeleitungsprozeß gewinnt, wird sich die Aufheizund Abkühlphase des Temperaturpulses 16 auf der Prüfkörperoberfläche ändern. Durch die Analyse der gemessenen Temperaturänderung des Temperaturpulses auf der Oberfläche, die sich in der gestrichelten Kurve 16' verdeutlicht, kann die Fehlertiefe ermittelt oder zumindest abgeschätzt werden. So kann z.B. bei bekannter Temperaturleitfähigkeit des Werkstoffes des Prüfkörpers bei einer bekannten Zeit $t_0$ bis $t_1$ der zugehörige Ort der Fehlerstelle ermittelt werden. Dies kann auch mit Eichmessungen durchgeführt werden. Eine Eichmessung kann z.B die Kurve 16 des Temperaturpulses ergeben, wobei dann die gemessene und über eine Fehlerstelle Informationen liefernde Kurve 16' eines Temperaturpulses gemessen wird und mit der Eichmessung zu vergleichen ist.

**Ansprüche**

1. Verfahren zur kontaktlosen Untersuchung von Oberflächen und inneren Strukturen eines festen Prüfkörpers, bei dem gegen den Prüfkörper ein Einzelpuls eines elektromagnetischen Anregungsstrahls, vorzugsweise eines gebündelten Laserstrahls, geworfen wird, und die Wirkung der dabei örtlich und zeitlich induzierten Prüfkörpertemperatur als vom Körper ausgehende Infrarotstrahlung gemessen und zu Informationen über die Oberfläche und die innere Struktur des Prüfkörpers verarbeitet wird,
dadurch gekennzeichnet,
daß der Einzelpuls des Laserstrahls in eine Vielzahl von Teilstrahlen (10) zerlegt wird, deren gleichzeitig auf den Prüfkörper (1) geworfene Abbildungen in einem Feld oder einer Linie zusammengefaßt sind, mit dem der Prüfkörper (1) abgetastet wird.

2. Verfahren nach Anspruch 1, dadurch gekennzeichnet, daß die Länge des Einzelpulses variiert wird.

3. Verfahren nach Anspruch 1, dadurch gekennzeichnet, daß die Intensität des Einzelpulses variiert wird.

4. Verfahren nach Anspruch 1, dadurch gekennzeichnet, daß die Länge und die Intensität des Einzelpulses variiert wird.

5. Verfahren nach den Ansprüchen 1 bis 4, dadurch gekennzeichnet, daß an fehlerfreien Stellen des Prüfkörpers (1) Eichmessungen vorgenommen und mit Messungen an fehlerhaften Stellen verglichen werden.

6. Vorrichtung zur Durchführung des Verfahrens nach den Ansprüchen 1 bis 5, gekennzeichnet durch eine Einrichtung (5) zur Erzeugung eines Einzelpulses eines auf eine Oberfläche (3) eines Prüfkörpers (1) gerichteten elektromagnetischen Anregungsstrahls (4, 4', 4''), die eine Aufweitoptik (6) aufweist und ein im Strahlengang nach der Aufweitoptik (6) befindliches Strahlteilungsorgan (7) hat und durch wenigstens einen auf den Prüfkörper (1) gerichteten infrarotempfindlichen Detektor (11, 11'), der an einen Rechner (12) zur Auswertung der gelieferten Meßwerte angeschlossen ist.

7. Vorrichtung nach Anspruch 6, dadurch gekennzeichnet, daß die Einrichtung (5) zur Erzeugung eines Einzelpulses als Laser ausgebildet ist.

8. Vorrichtung nach Anspruch 6, dadurch gekennzeichnet, daß das Strahlteilungsorgan (7) als Blende (8) ausgebildet ist.

9. Vorrichtung nach Anspruch 8, dadurch gekennzeichnet, daß die Blende (8) ein der Anzahl und Verteilung der Teilstrahlen (10) entsprechendes Lochbild aufweist.

10. Vorrichtung nach einem der Ansprüche 6 bis 9, dadurch gekennzeichnet, daß jede Blende (8) auswechselbar angeordnet ist.

11. Vorrichtung nach einem der Ansprüche 6 bis 10, dadurch gekennzeichnet, daß sich im Strahlengang zwischen Aufweitoptik (6) und Strahlteilungsorgan (7) eine den Strahl auf eine Linie fokussierende Anordnung (13) befindet.

12. Vorrichtung nach Anspruch 11, dadurch gekennzeichnet, daß die fokussierende Anordnung (13) eine Zylinderlinse (14) ist.

13. Vorrichtung nach einem der Ansprüche 6 bis 12, dadurch gekennzeichnet, daß jeder Detektor (11, 11') eine Wärmebildkamera ist.

Fig.1

Fig.2

Fig.3

Fig.4

10717

_Fig. 5_

5

4

6

4'

13

14

4"

11

8'

10

12

1

11'

_Fig. 6_

8'

_Fig. 7_

8'

_Fig. 8_

8'

## Fig. 9

10717